# EUROPÄISCHE PATENTANMELDUNG

(11) **EP 2 662 457 A1**
(43) Veröffentlichungstag der Anmeldung: **13.11.2013**
(21) Anmeldenummer: 12166998.0
(22) Anmeldetag: 07.05.2012
(51) Int. Cl.: C21B 13/00, C22B 1/243, C22B 1/244, C22B 1/245, C22B 7/02

(54) **Verfahren und Vorrichtung zur Herstellung von Agglomeraten und Verwendung der Agglomerate in einem FINEX®-Verfahren**

(71) Anmelder: Siemens VAI Metals Technologies GmbH, 4031 Linz (AT)
(72) Erfinder: Heckmann, Hado, Dr., 4020 Linz (AT); Plaul, Jan-Friedemann, Dr., 4020 Linz (AT); Weiss, Bernd, Dr., 4030 Linz (AT); Wieder, Kurt, 4311 Schwertberg (AT)
(74) Vertreter: Maier, Daniel Oliver

(57) **Zusammenfassung**

Die Erfindung betrifft eine Verfahren und eine Vorrichtung zur Herstellung von Agglomeraten, bei dem ein feinstkörnige eisenhältige Konzentrate (32), Wasser (34) und gegebenenfalls Bindemittel (33) umfassendes Gemisch (5) hergestellt wird. Dieses Gemisch (5) wird unter Zugabe von kohlenstoffhältigem Material (16) zu Agglomeraten agglomeriert, wobei die Agglomerate mittels einer nachfolgenden Wärmebehandlung ausgehärtet werden.

Ein weiterer Gegenstand der Erfindung ist die Verwendung der erfindungsgemäß hergestellten Agglomerate zur Herstellung von flüssigem Roheisen (17) beziehungsweise flüssigen Stahlvorprodukten (18). Die Agglomerate werden mittels eines Reduktionsgases (19) in einem Reduktionsaggregat (20) vorreduziert, und nachfolgend in einem Schmelzreduktionsaggregat (24) zu flüssigem Roheisen (17) beziehungsweise flüssigen Stahlvorprodukten (18) aufgeschmolzen.

## Beschreibung

### Technisches Gebiet

Die Erfindung betrifft eine Verfahren und eine Vorrichtung zur Herstellung von Agglomeraten, bei dem ein feinstkörnige eisenhältige Konzentrate, Wasser und gegebenenfalls Bindemittel umfassendes Gemisch hergestellt wird. Dieses Gemisch wird unter Zugabe von kohlenstoffhältigem Material zu Agglomeraten agglomeriert, wobei die Agglomerate mittels einer nachfolgenden Wärmebehandlung gehärtet werden.

Ein weiterer Gegenstand der Erfindung ist die Verwendung der erfindungsgemäß hergestellten Agglomerate zur Herstellung von flüssigem Roheisen beziehungsweise flüssigen Stahlvorprodukten. Die Agglomerate werden mittels eines Reduktionsgases in einem Reduktionsaggregat vorreduziert und nachfolgend in einem Schmelzreduktionsaggregat zu flüssigem Roheisen beziehungsweise flüssigen Stahlvorprodukten aufgeschmolzen.

### Stand der Technik

In aus dem Stand der Technik bekannten Verfahren zur Herstellung von flüssigem Roheisen beziehungsweise flüssigen Stahlvorprodukten, wie beispielsweise dem FINEX^{®} - Verfahren, werden Eisenträger, wie beispielsweise eisenoxidhältige Stoffe, insbesondere Eisenerze, in einem Reduktionsaggregat mit Wirbelschichtverfahren in einer Wirbelschicht vorreduziert und anschließend in einem Schmelzreduktionsaggregat fertig reduziert und zu flüssigem Roheisen oder flüssigem Stahlvorprodukt aufgeschmolzen.

Dabei ist es aus prozesstechnischen Gründen notwendig, dass die im Reduktionsaggregat eingesetzten Eisenträger einen bestimmten Mindesteisengehalt aufweisen, beziehungsweise dass der Gehalt an Schadstoffen oder an Gangart der eingesetzten Eisenträger einen bestimmten Wert nicht überschreitet. Die gewünschten Eigenschaften der Eisenträger werden dazu mittels von aus dem Stand der Technik bekannten Aufbereitungsprozessen eingestellt. Ein sehr weit verbreiteter Aufbereitungsprozess ist der Flotationsprozess. Die mittels des Flotationsprozesses gewonnenen eisenhältigen Konzentrate weisen typischerweise Körnungen von unter 100µm auf, sogenannte feinstkörnige eisenhältige Konzentrate. Obwohl aus wirtschaftlichen Gründen eine maximale Nutzung dieser feinstkörnigen eisenhältigen Konzentrate, beispielsweise im FINEX^{®} - Verfahren, gewünscht ist, ist ein Direkteinsatz solcher feinstkörnigen eisenhältigen Konzentrate in einem Reduktionsaggregat mit Wirbelschichtverfahren nur begrenzt - bis rund 30% der gesamten im Reduktionsaggregat eingesetzten Eisenträger, dem Eisenmöller - möglich, da die 30% übersteigenden Anteile dieser feinstkörnigen eisenhältigen Konzentrate nicht in der Wirbelschicht des Reduktionsaggregates gehalten und mit dem aus dem Reduktionsaggregat abgezogenen Offgas als Wertstoffe aus diesem ausgetragen werden. Diese ausgetragenen Anteile der feinstkörnigen eisenhältigen Konzentrate werden nicht reduziert, belasten das Entstaubungssystem und verringern zusätzlich die Wirtschaftlichkeit des Verfahrens zur Herstellung von flüssigem Roheisen beziehungsweise flüssigen Stahlvorprodukten.

Eine erste, aus dem Stand der Technik bekannte Lösung zur Beseitigung zumindest einiger der oben genannten Nachteile liegt darin, in solchen Reduktionsaggregaten mit Wirbelschichtverfahren gar keine feinstkörnigen eisenhältigen Konzentrate oder nur einen begrenzten Anteil, maximal 30 Prozent, an feinstkörnigen eisenhältigen Konzentraten einzusetzen.

Eine zweite Möglichkeit zur Beseitigung der Nachteile besteht darin, die feinstkörnigen eisenhältigen Konzentrate zu granulieren oder zu pelletieren und anschließend als Konzentrat-Granulate oder Konzentrat-Pellets im Reduktionsaggregat mit Wirbelschichtverfahren einzusetzen. Auf Grund der im Vergleich zu den feinstkörnigen eisenhältigen Konzentraten größeren Korngrößen der Konzentrat-Granulate oder Konzentrat-Pellets werden die aus dem Reduktionsaggregat mit Wirbelschichtverfahren ausgetragenen Anteile an Wertstoffen verringert. Würde im Rahmen des FINEX^{®} - Verfahrens eine derartige - nach dem Stand der Technik durchgeführte - Granulierung oder Pelletierung angewendet werden, so würde der wirtschaftliche Vorteil einer Reduktion mit Wirbelschichtverfahren gegenüber einer Reduktion mit Festbettverfahren, beispielsweise in einem Reduktionsschacht, durch eine zur Herstellung der Konzentrat-Granulate oder der Konzentrat-Pellets notwendige Agglomerationsvorrichtung mit zugeordneter Wärmebehandlungsvorrichtung und deren hoher Energiebedarf nichtig gemacht werden. Dieser hohe Energiebedarf ist deshalb erforderlich, weil bei der nach dem Stand der Technik durchgeführte Granulierung oder Pelletierung die Wärmebehandlung der Konzentrat-Granulate oder Konzentrat-Pellets bei einer Temperatur von über 1200°C erfolgt. Deshalb ist die zweite Möglichkeit zur Beseitigung der Nachteile im Rahmen eines FINEX^{®} - Verfahrens nicht geeignet.

Durch den Einsatz eines Kaltbinders bei der Granulierung oder Pelletierung könnte der Energiebedarf der, der Agglomerationsvorrichtung zugeordneten Wärmebehandlungsvorrichtung, deutlich reduziert werden, beziehungsweise wäre eine Wärmebehandlungsvorrichtung überhaupt nicht mehr notwendig. Dadurch bliebe zwar der wirtschaftliche Vorteil der Reduktion mit Wirbelschichtverfahren gegenüber der Reduktion mit Festbettverfahren gewahrt, jedoch weisen die durch Zusatz des Kaltbinders hergestellten Granulate oder Pellets eine für den Einsatz im Reduktionsaggregat mit Wirbeschichtverfahren zu geringe Festigkeit in der Wirbelschicht auf. Im Hinblick auf das FINEX^{®} - Verfahren ist die Anwendung dieser Variante deshalb ebenso ungeeignet.

Um die Festigkeit der Granulate oder Pellets in der Wirbelschicht trotz eines deutlich reduzierten Energiebedarfes bei der Wärmebehandlung in der Wärmbehandlungsvorrichtung zu steigern, wurde vorgeschlagen, die Granulate oder Pellets aus zwei Schichten aufzubauen, beziehungsweise deren Kerne mit einer äußeren Schicht zu überziehen, wobei die Festigkeit der Granulate beziehungsweise der Pellets in der Wirbelschicht maßgeblich von der Festigkeit der äußeren Schicht, welche durch die Wärmebehandlung mit deutlich reduziertem Energiebedarf in der Wärmebehandlungsvorrichtung erzeugt wird, bestimmt wird. Auch bei dieser Variante würde der wirtschaftliche Vorteil einer Reduktion mit Wirbelschichtverfahren, insbesondere beim FINEX^{®} - Verfahren, gegenüber einer Reduktion mit Festbettverfahren auf Grund des hohen Equipmentaufwandes - es wären ein oder mehrere Agglomerationsvorrichtungen zum Aufbau der zwei Schichten notwendig - wesentlich vermindert werden.

### Zusammenfassung der Erfindung

### Technische Aufgabe

Die Aufgabe der vorliegenden Erfindung ist es, ein Verfahren und eine Vorrichtung zur Herstellung von feinstkörnige eisenhältige Konzentrate enthaltenden Agglomeraten mit hoher Festigkeit für deren Einsatz bei einer Reduktion mit Wirbelschichtverfahren bereitzustellen.

### Technische Lösung

Die technische Aufgabe wird gelöst durch ein Verfahren zur Herstellung von Agglomeraten, bei dem ein feinstkörnige eisenhältige Konzentrate, Wasser und gegebenenfalls Bindemittel umfassendes Gemisch hergestellt wird, und wobei das Gemisch in einem Agglomerationsschritt, gegebenenfalls unter Zugabe von Wasser, zu Agglomeraten agglomeriert, und die Agglomerate mittels einer nachfolgenden Wärmebehandlung gehärtet werden, und wobei vor dem Agglomerationsschritt kohlenstoffhältiges Material in das Gemisch eingebracht wird, und die Wärmebehandlung der Agglomerate bei einer Temperatur zwischen 500°C und 1200°C erfolgt.

Das Gemisch umfasst feinstkörnige eisenhältige Konzentrate, wobei unter feinstkörnig eine Körnung von unter 100µm zu verstehen ist. Diese eisenhältigen Konzentrate, welche beispielsweise mittels eines Flotationsprozesses hergestellt werden, umfassen Eisenoxide, insbesondere Eisenerze wie Magnetit oder Hämatit, und/oder andere eisenoxidhältige Verbindungen, wobei der Gehalt an Gangart und/oder Schadstoffen gering ist. Soche Konzentrate sind daher immer eisenoxidhältige Konzentrate und weisen, beispielsweise bei Verwendung in einem FINEX^{®} - Verfahren, vorzugsweise einen Eisengehalt von mehr als 60 Massenprozent, besonders bevorzugt von mehr als 63 Massenprozent, ganz besonders bevorzugt von mehr als 65 Massenprozent auf, wobei diese Prozentangaben für einen wasserfreien Zustand der Konzentrate gelten.

Unter Agglomerat ist eine technisch hergestellte Zusammenballung einzeln vorliegender Bestandteile zu verstehen. Die technische Herstellung der Zusammenballung erfolgt im Agglomerationsschritt mittels einer Agglomerationsvorrichtung. Die einzeln vorliegenden Bestandteile umfassen die feinstkörnigen eisenhältigen Konzentrate, Wasser und gegebenenfalls das Bindemittel. Insbesondere sind unter Agglomerate Pellets und/oder Granulate zu verstehen.

Das Gemisch wird beim Agglomerationsschritt vorzugsweise mittels einer Aufbauagglomeration zu Pellets und/oder Granulaten agglomeriert. Dies erfolgt in einer Agglomerationsvorrichtung beispielsweise mittels Granuliertellern, Granuliertrommeln oder Mischern. Gegebenenfalls wird dem Gemisch vor dem Agglomerationsschritt ein Bindemittel zugesetzt. Als Bindemittel werden beispielsweise anorganische Stoffe oder deren Mischungen, insbesondere gebrannter oder gelöschter Kalk oder Bentonite verwendet. Auch organische Bindemittel oder deren Mischungen kommen in Frage, insbesondere Melasse, Produkte aus Ablaugen der Zellstoffgewinnung, Stärken, langkettige Polyelektrolyte auf der Basis von Zellulose oder synthetische Polymere, insbesondere Polyvinylacetat. Unter synthetische Polymere ist beispielsweise auch zu verstehen:
- Styrol-Butadien-Mischpolymerisate,
- Acrylate,
- Thermoplaste und Kunstharze wie beispielsweise
   o Polystyrol,
   o Polyäthylen,
   o Polyäthylenwachs,
   o Phenolharz,
   o Xylolformaldehydharz,
- Polyurethane wie beispielsweise
   o Polyähter
   o Polyisocyanate

Nach dem erfindungsgemäßen Verfahren wird vor dem Agglomerationsschritt in das Gemisch ein kohlenstoffhältiges Material eingebracht. Das kohlenstoffhältige Material wird dem Gemisch vor dem Agglomerationsschritt zugeführt. Das das kohlenstoffhältige Material umfassende Gemisch wird nach Zuführung des kohlenstoffhältigen Materials in das Gemisch in dem Agglomerationsschritt zu Agglomeraten agglomeriert und anschließend in einer Wärmebehandlungsvorrichtung einer Wärmebehandlung bei einer Temperatur zwischen 500°C und 1200°C, vorzugsweise bei einer Temperatur zwischen 800°C und 1100°C, besonders bevorzugt bei einer Temperatur zwischen 800°C und 1000°C unterzogen.

Die Wärmebehandlung in der Wärmebehandlungsvorrichtung kann gegebenenfalls in Form von mehreren zeitlich aufeinanderfolgenden Wärmebehandlungsschritten mit jeweils unterschiedlichen Temperaturen je Wärmebehandlungsschritt und unterschiedlichen oder gleichen Behandlungszeiten je Wärmebehandlungslungsschritt erfolgen.

Zuerst wird das Gemisch hergestellt. Das kohlenstoffhältige Material wird während der Herstellung des Gemisches in das Gemisch eingebracht beziehungsweise dem Gemisch zugeführt, und/oder auch danach. Wird das kohlenstoffhältige Material dem Gemisch nach dessen Herstellung zugeführt beziehungsweise in dieses eingebracht, dann erfolgt dies jedenfalls vor dem Agglomerationsschritt. Nach dem Agglomerationsschritt erfolgt in der Wärmebehandlungsvorrichtung eine Wärmebehandlung der in dem Agglomerationsschritt agglomerierten Agglomerate. Durch das Einbringen des kohlenstoffhältigen Materials in das Gemisch setzt bei einer Temperatur von etwa 800°C eine Reduktion der im Gemisch enthaltenen eisenhältigen Konzentrate beziehungsweise eine Reduktion der im Gemisch enthaltenen eisenoxidhältigen Konzentrate mit gasförmigem Kohlenmonoxid, eine sogenannte Direktreduktion, ein. Das Kohlenmonoxid wird durch Oxidation des ebenfalls in dem Gemisch vorhandenen kohlenstoffhältigen Materials, beziehungsweise durch Oxidation des in dem kohlenstoffhältigen Material enthaltenen Kohlenstoffes gebildet. Der für die Oxidation erforderliche Sauerstoff stammt beispielsweise aus der das Gemisch umgebenden Luftatmosphäre und/oder aus den eisenoxidhältigen Konzentraten selbst. Letzteres wird als direkte Reduktion bezeichnet. Beispielsweise umfasst das eisenoxidhältige Material Magnetit und Hämatit, dann ist die Direktreduktion des Hämatits eine exotherme, die Direktreduktion des Magnetits eine endotherme Reaktion. Unter einer exothermen Reaktion ist eine Reaktion zu verstehen, bei der Wärmeenergie gebildet wird. Unter einer endothermen Reaktion ist eine Reaktion zu verstehen, bei der Energie zugeführt werden muss, um ihren Ablauf zu ermöglichen. Parallel zu den oben genannten Reduktionsreaktionen erfolgt eine Verbrennung des in dem kohlenstoffhältigen Material enthaltenen Kohlenstoffs mit Sauerstoff zu Kohlendioxid. Diese Reaktion ist eine exotherme Reaktion. Die Energiebilanz der oben genannten Reduktionsreaktionen und der Verbrennung ist insgesamt immer positiv, das bedeutet, dass insgesamt Wärmeenergie gebildet wird. In dem Ausmaß, in dem bei den genannten Reaktionen Wärmeenergie gebildet wird, verringert sich der bei der Wärmebehandlung in der Wärmebehandlungsvorrichtung notwendige Energiebedarf. In Abhängigkeit des vorhandenen Mischungsverhältnisses der eisenhältigen Konzentrate zu dem eingebrachten kohlenstoffhältigen Material in den Agglomeraten ändert sich der bei der Wärmbehandlung notwendige Energiebedarf, also jener Energiebedarf, der von Außen einzubringen ist. Das Mischungsverhältnis kann so derart gewählt werden, dass der von Außen einzubringende Energiebedarf Null wird, also einen sogenannten autothermen Prozess ermöglicht.

Der Vorteil, der sich durch das Einbringen des kohlenstoffhältigen Materials in das Gemisch ergibt ist jener, dass ab einer Temperatur von 800°C in der Wärmebehandlungsvorrichtung in Zusammenhang mit den oben genannten Reduktionsreaktionen und der Verbrennung niedrigschmelzende Phasen im Gemisch gebildet werden. Diese niedrigschmelzenden Phasen führen zu einem Sintereffekt, wodurch die Festigkeit der Agglomerate im Vergleich zu nach dem Stand der Technik hergestellten Agglomeraten beziehungsweise Pellets und/oder Granulaten ab dieser Temperatur wesentlich erhöht wird.

Überraschender Weise wurde in Versuchen eine Erhöhung der Festigkeit der Agglomerate bereits bei Temperaturen ab 500°C in der Wärmebehandlungsvorrichtung festgestellt.

Dies hat zur Folge, dass im Vergleich zum Stand der Technik, bei dem Temperaturen einer entsprechenden Wärmebehandlung der Agglomerate von mindestens 1200°C notwendig sind, beim vorliegenden erfindungsgemäßen Verfahren eine Temperatur bei der Wärmebehandlung ab 500°C für die Wärmebehandlung genügt, um eine Festigkeit der Agglomerate zu erreichen, die mit der mittels des Standes der Technik erreichbaren Festigkeit der Agglomerate vergleichbar ist.

Ein weiterer Vorteil, der sich durch das erfindungsgemäße Verfahren ergibt ist der, dass der im Reduktionsaggregat eingesetzte Eisenmöller, also die Gesamtheit der im Reduktionsaggregat eingesetzten eisenhältigen Stoffe, bis zu 100% aus den erfindungsgemäß hergestellten Agglomeraten bestehen kann. Dies ist speziell dann von großem Vorteil, wenn die beim erfindungsgemäßen Verfahren verwendeten feinsteilchenförmigen eisenhältigen Konzentrate kostengünstig verfügbar sind.

In einer Variante zerfließen die in die Wärmebehandlungsvorrichtung eingebrachten Agglomerate während der Wärmebehandlung zu einem Sinterkuchen. Der Sinterkuchen wird nachfolgend durch Brechen in eine für den Einsatz in nachfolgenden Prozessen geeignete Form übergeführt. Vorzugsweise wird der Sinterkuchen derart gebrochen, dass der gebrochene Sinterkuchen eine für den Einsatz in einem FINEX^{®}-Prozess geeignete Körngröße aufweist.

Eine vorteilhafte Ausgestaltung des erfindungsgemäßen Verfahrens ist dadurch gekennzeichnet, dass das kohlenstoffhältige Material aus einer, einer FINEX^{®}-Anlage, COREX^{®}-Anlage, einem Hochofen oder einer Direktreduktionsanlage zugeordneten, Entstaubungseinrichtung stammt.

Bei der Entstaubung von Prozessgasen in einer, einer FINEX^{®}-Anlage, COREX^{®}-Anlage, einem Hochofen oder einer Direktreduktionsanlage zugeordneten, Entstaubungseinrichtung werden mit den Prozessgasen mittransportierte Feststoffpartikel aus dem Prozessgas abgeschieden. Diese abgeschiedenen Feststoffpartikel umfassen kohlenstoffhältiges Material. Solche Prozessgase sind beispielsweise Reduktionsgas oder Offgas aus einem Reduktionsaggregat, einem Hochofen oder einem Schachtreaktor. Das abgeschiedene, kohlenstoffhältige Material wird vor dem Agglomerationsschritt in das Gemisch eingebracht und kann somit direkt als Wertstoff im Verfahren zur Herstellung von Agglomeraten eingesetzt werden. Die in der Entstaubungseinrichtung abgeschiedenen Feststoffpartikel umfassen aber nicht nur kohlenstoffhältiges Material, sondern auch eisenhältige Stoffe, welche ebenfalls als Wertstoff im Verfahren zur Herstellung von Agglomeraten eingesetzt werden können. Somit können die bei der Entstaubung anfallenden Wertstoffe bei der Agglomeration recycled werden, wodurch eine alternative Nutzung beziehungsweise Entsorgung entfällt. Dies ist insbesondere dann von Vorteil, wenn sich die Agglomerationsvorrichtung und die FINEX^{®}-Anlage, die COREX^{®}-Anlage, der Hochofen oder der Schachtreaktor in einer nahen örtlichen Umgebung befinden.

Gemäß einer besonders vorteilhaften Ausgestaltung des erfindungsgemäßen Verfahrens ist die Entstaubungseinrichtung eine Nassentstaubungseinrichtung, wobei das kohlenstoffhältige Material Schlamm, insbesondere FINEX^{®}-Schlamm, aus der Nassentstaubungseinrichtung umfasst.

Der Kohlenstoffgehalt von FINEX^{®}-Schlamm aus einer Nassentstaubungseinrichtung liegt bei etwa 10% von dessen Trockensubstanz. Liegen sowohl der Schlamm als auch das feinstkörnige eisenhältige Konzentrat in nasser, fließfähiger Konsistenz vor, so kann der Schlamm, welcher das kohlenstoffhältige Material umfasst, unmittelbar in das Gemisch eingebracht werden. Soweit ein bestimmter, bei der Agglomerierung des Gemisches zu Agglomeraten anzustrebender Feuchtigkeitsgehalt des Gemisches eingestellt werden soll, kann nach der Herstellung des Gemisches eine Trocknung des Gemisches notwendig sein. Damit kann der gesamte, in der Nassentstaubungseinrichtung anfallende Schlamm in das Verfahren zur Herstellung von Agglomeraten recycled werden.

Bei einer weiteren Ausführungsform des erfindungsgemäßen Verfahrens Verfahren wird der Schlamm vor seinem Einbringen in das Gemisch einer mechanischen Vorentwässerung in einer Entwässerungsvorrichtung und einer nachfolgenden Trocknung unterzogen.

Der bei einer Nassentstaubung in der Nassentstaubungseinrichtung anfallende Schlamm wird vor dem Einbringen in das Gemisch in einer Entwässerungsvorrichtung einer mechanischen Vorentwässerung unterzogen, so dass der Schlamm nach der mechanischen Vorentwässerung eine feste Konsistenz in Form eines Kuchens annimmt. Anschließend wird der mechanisch vorentwässerte Schlamm einer Trocknung unterzogen, wobei der Kuchen in eine staubförmige beziehungsweise pulvrige Konsistenz übergeführt wird. Das kohlenstoffhältige Material wird bei dieser Ausführungsform in trockenem Zustand in das Gemisch eingebracht. Dies ist insbesondere dann vorteilhaft, wenn das feinstkörnige eisenhältige Konzentrat ebenfalls eine staubförmige beziehungsweise pulvrige Konsistenz aufweist.

Gemäß einer weiteren speziellen Ausgestaltung des erfindungsgemäßen Verfahrens ist die Entstaubungseinrichtung eine Trockenentstaubungseinrichtung.

Der bei einer Trockenentstaubung in der Trockenentstaubungseinrichtung anfallende Staub kann, falls das feinstkörnige eisenhältige Konzentrat in staubförmiger oder pulvriger Konsistenz in trockener Form, vorliegt direkt in das Gemisch eingebracht werden. Eine mechanische Vorentwässerung in der Entwässerungsvorrichtung beziehungsweise eine nachfolgende Trocknung des Staubes ist dann nicht mehr notwendig.

Eine weitere Ausführungsform des erfindungsgemäßen Verfahrens sieht vor, dass das Gemisch mittels mehrerer aufeinanderfolgenden Mischungsschritte hergestellt wird.

Bei dieser Ausführungsform wird das Gemisch mittels mehrer, in der gleichen oder in verschiedenen Mischvorrichtungen durchgeführten Mischungsschritten hergestellt. Beispielsweise wird eine trockene Vormischung unter Zugabe des Bindemittels, des kohlenstoffhältigen Materials und ohne Zugabe des Wassers in einem ersten Mischungsschritt und anschließend das Gemisch, wobei der trockenen Vormischung in einem zweiten Mischungsschritt Wasser zugegeben wird, hergestellt. Das kohlenstoffhältige Material kann dabei während des ersten Mischungsschrittes und/oder während des zweiten Mischungsschrittes in die Vormischung beziehungsweise in das Gemisch eingebracht werden. Es ist auch möglich, den Mischungsschritt oder die Mischungsschritte und den Agglomerationsschritt in einer Einheit auszuführen.

Eine Ausführungsform des erfindungsgemäßen Verfahrens ist dadurch gekennzeichnet, dass das Bindemittel Bentonit ist.

Dabei wird beispielsweise das erfindungsgemäß hergestellte Gemisch unter Zugabe des Bentonits für eine bestimmte Zeit ruhend gestellt, bevor es zu Agglomeraten agglomeriert wird. Bevorzugt beträgt der Anteil an Bentonit bis 1 Massenprozent der Trockenmasse des Gemisches.

Bei einer weiteren Ausführungsform des erfindungsgemäßen Verfahrens werden die Agglomerate einer Klassierung, unter Abscheidung eines Fehlkornes, zur Einstellung eines bestimmten Kornbandes der Agglomerate unterzogen.

Die Klassierung erfolgt beispielsweise durch Siebung der Agglomerate. Dabei wird das Fehlkorn - Unterkorn beziehungsweise Überkorn - , das sind jene Agglomerate, deren Korngröße nicht in das bei nachfolgenden Prozessen gewünschte Kornband passt, aus der Gesamtheit der Agglomerate abgeschieden. Ist der nachfolgende Prozess ein Reduktionsprozess mit Wirbelschichtverfahren, so werden jene Agglomerate die auf Grund ihrer geringen Korngröße mit dem Offgas aus dem Reduktionsaggregat ausgetragen werden würden, also sogenanntes Unterkorn, abgeschieden. Weiters werden auch all jene Agglomerate als Überkorn abgeschieden, die auf Grund ihrer großen Korngröße in der Wirbelschicht nicht in einem Schwebezustand gehalten werden könnten. Damit kann ein definiertes, auf den nachfolgenden Prozess genau abgestimmtes Kornband der Agglomerate erzielt werden.

Eine Ausführungsform des erfindungsgemäßen Verfahrens ist dadurch gekennzeichnet, dass das abgeschiedene Fehlkorn, gegebenenfalls nach einem Desagglomerationsschritt, in das Gemisch eingebracht und/oder dem Agglomerationsschritt zugeführt wird.

Handelt es sich beim abgeschiedenen Fehlkorn um Überkorn, so wird das Überkorn vor dem Einbringen in das Gemisch und/oder vor der Zuführung des Fehlkornes zu dem Agglomerationsschritt in einem Desagglomerationsschritt mittels einer Desagglomerationsvorrichtung zerkleinert. Der Desagglomerationsschritt ist beispielsweise ein Mahlschritt in einer Zerkleinerungsmühle.

In einer Variante kann auch das Unterkorn im Desagglomerationsschritt zerkleinert werden.

Das im Desagglomerationsschritt desagglomerierte Fehlkorn wird vor der Agglomerierung des Gemisches im Agglomerationsschritt in das Gemisch eingebracht und/oder dem Gemisch direkt während dessen Agglomerierung im Agglomerationssschritt zugeführt.

In einer weiteren Variante wird zumindest eine Teilmenge des Fehlkorns vor dessen Desagglomeration im Desagglomerationsschritt dem Gemisch vor dessen Agglomerierung im Agglomerationsschritt zugeführt und/oder dem Gemisch direkt während dessen Agglomerierung im Agglomerationssschritt zugeführt.

Bei einer weiteren Ausführungsform des erfindungsgemäßen Verfahrens umfassen die feinstkörnigen eisenhältigen Konzentrate Magnetit und/oder Hämatit.

Ein weiterer Gegenstand der vorliegenden Erfindung ist eine Vorrichtung zur Durchführung des erfindungsgemäßen Verfahrens umfassend zumindest eine Mischvorrichtung zur Herstellung eines Gemisches mit zugeordneter Konzentratzufuhrleitung, Bindemittelzufuhrleitung und Wasserzufuhrleitung, eine der Mischvorrichtung nachgeordnete Agglomerationsvorrichtung zur Agglomeration des Gemisches zu Agglomeraten und eine der Agglomerationsvorrichtung nachgeordnete Wärmebehandlungsvorrichtung zur Härtung der Agglomerate, wobei der Mischvorrichtung eine Zufuhrleitung zur Zufuhr von kohlenstoffhältigem Material zugeordnet ist. Der Ausdruck "nachgeordnet" ist immer in Bezug auf die Materialflussrichtung des Gemisches zu sehen.

Die Konzentratzufuhrleitung ist geeignet, um das feinstkörnige eisenhältige Konzentrat der Mischvorrichtung in staubförmiger oder pulvriger Konsistenz in trockener Form und in nasser, fließfähiger Konsistenz zuzuführen. Die Agglomerationsvorrichtung ist bevorzugt als Aufbauagglomerationsvorrichtung ausgebildet.

Die Agglomerationsvorrichtung kann auch derart ausgebildet sein, dass sie auch zur Herstellung des Gemisches geeignet ist, oder es können mehrere aufeinanderfolgende Mischvorrichtungen vorhanden sein, wobei das Gemisch in mehreren aufeinanderfolgenden Mischungsschritten hergestellt wird. Die Agglomerationsvorrichtung kann auch so ausgebildet sein, dass mehrere aufeinanderfolgende Agglomerationschritte durchgeführt werden können - eine sogenannte Mehrschichtagglomerationsvorrichtung.

Dadurch ergibt sich der Vorteil, dass bei Anreicherung beziehungsweise Konzentration des kohlenstoffhältigen Materials in den Außenzonen der Agglomerate in diesen Außenzonen durch lokale Überhitzung dieser Außenzonen in der Wärmebehandlungsvorrichtung eine harte Schale mit hoher Festigkeit entsteht. Unter der Voraussetzung, dass in diesem Fall die Festigkeit der Agglomerate weitgehend durch die Festigkeit der Schale bestimmt wird, benötigen kleine Agglomerate, welche zwar bei der Reduktion mit Wirbelschichtverfahren, jedoch auf Grund der Notwendigkeit der Gewährleistung einer bestimmten Mindestpermeabilität des Festbettes bei der Reduktion mit Festbettverfahren dort nicht eingesetzt werden können, im Gegensatz zu großen Agglomeraten eine kürzere Behandlungszeit in der Wärmebehandlungsvorrichtung. Dies ist deshalb der Fall, weil bei gleicher Dicke der harten Schale kleine Agglomerate stabiler als große Agglomerate sind.

Die Zufuhrleitung zur Zufuhr von kohlenstoffhältigem Material in die Mischvorrichtung ist geeignet, das kohlenstoffhältige Material der Mischvorrichtung in Form von Schlamm mit fließfähiger Konsistenz oder als Material mit staubförmiger beziehungsweise pulvriger Konsistenz zuzuführen. Die Agglomerationsvorrichtung verfügt bevorzugt über eine Wasserzufuhrleitung.

Eine besonders bevorzugte Ausführungsform der erfindungsgemäßen Vorrichtung zeichnet sich dadurch aus, dass der Wärmebehandlungsvorrichtung eine Klassierungsvorrichtung zur Klassierung der in der Wärmebehandlungsvorrichtung gehärteten Agglomerate mit einer zugeordneten Austragleitung zum Austragen der gehärteten und klassierten Agglomerate nachgeordnet ist, und eine der Klassierungsvorrichtung entspringende und in die Mischvorrichtung beziehungsweise Agglomerationsvorrichtung mündende Recylcleleitungen zur Zufuhr eines in der Klassierungsvorrichtung abgeschiedenen Fehlkornes in die Mischvorrichtung beziehungsweise Agglomerationsvorrichtung vorhanden ist.

In der Klassierungsvorrichtung wird das Unterkorn beziehungsweise Überkorn aus der Gesamtheit der in der Wärmebehandlungsvorrichtung gehärteten Agglomerate abgeschieden. Der nicht abgeschiedene Anteil der Agglomerate gelangt über die Austragleitung gegebenenfalls in einen nachfolgenden Prozess. Der abgeschiedene Anteil der Agglomerate gelangt über die Recycleleitung in die Mischvorrichtung. Damit kann das abgeschiedene und für die nachfolgenden Prozesse ungeeignete Fehlkorn wieder in den Herstellungsprozess für die Pellets beziehungsweise für die Granulate rückgeführt und damit einer sinnvollen Nutzung unterzogen werden. Vorteilhafterweise verfügt die Agglomerationsvorrichtung ebenfalls über eine Zufuhrleitung für Fehlkorn, welche der Recycleleitung entspringt und in die Agglomerationsvorrichtung mündet.

Eine Ausführungsform der erfindungsgemäßen Vorrichtung sieht vor, dass in der Recycleleitung eine Desagglomerationsvorrichtung zur Desagglomerierung eines im Fehlkorn enthaltenen Überkornes und/oder Unterkornes angeordnet ist.

Die Desagglomerationsvorrichtung kann als Zerkleinerungsmühle ausgebildet sein, in der das in der Klassierungsvorrichtung abgeschiedene Fehlkorn zerkleinert und anschließend der Mischvorrichtung und/oder der Agglomerationsvorrichtung zugeführt wird.

Bei einer weiteren Ausführungsform der erfindungsgemäßen Vorrichtung ist in der Zufuhrleitung zur Zufuhr von kohlenstoffhältigem Material eine Entwässerungsvorrichtung zur Vorentwässerung des als Schlamm in die Entwässerungsvorrichtung eingebrachten kohlenstoffhältigen Materials und eine nachgeordnete Trocknungseinrichtung zur Trocknung des vorentwässerten kohlenstoffhältigen Materials angeordnet.

Der vorentwässerte Schlamm kann der Mischungsvorrichtung zusätzlich auch direkt über eine die Trocknungseinrichtung umgehende Bypassleitung zugeführt werden.

Ein weiterer Gegenstand der Erfindung ist die Verwendung von nach dem erfindungsgemäßen Verfahren hergestellten Agglomerate in einem Verfahren zur Herstellung von flüssigem Roheisen beziehungsweise flüssigen Stahlvorprodukten, wobei die Agglomerate mittels eines Reduktionsgases in zumindest einem Reduktionsaggregat vorreduziert werden, und das verbrauchte Reduktionsgas als Offgas aus dem Reduktionsaggregat abgezogen wird, und die vorreduzierten Agglomerate, gegebenenfalls nach einer Kompaktierung und/oder einer Zwischenspeicherung in einem vom Reduktionsgas durchströmten Bunker, in ein Schmelzreduktionsaggregat eingebracht werden, und unter Zugabe von sauerstoffhältigem Gas und kohlenstoffhältigen Energieträgern unter Bildung des Reduktionsgases fertigreduziert und zu flüssigem Roheisen beziehungsweise flüssigen Stahlvorprodukten aufgeschmolzen werden.

Das Verfahren zur Herstellung von flüssigem Roheisen beziehungsweise flüssigen Stahlvorprodukten ist vorzugsweise ein FINEX^{®} - Verfahren, bei dem das zumindest eine Reduktionsaggregat als Reduktionsaggregat mit Wirbelschichtverfahren ausgebildet ist.

In einer Variante wird den Agglomeraten, vor ihrer Vorreduktion in dem zumindest einem Reduktionsaggregat, zumindest eine Teilmenge des abgeschiedenen Unterkornes und/oder zumindest eine Teilmenge des im Desagglomerationsschritt desagglomerierten Fehlkornes und/oder natürliches Feinerz und/oder zumindest eine Teilmenge von den aus der Agglomerationsvorrichtung stammenden gehärteten Agglomeraten nach einer Zerkleinerung, als sogenannte Mittelkornfraktion, und zumindest eine Teilmenge der feinstkörnigen eisenhältigen Konzentrate als Feinfraktion, dosiert zugesetzt. Vorzugsweise beträgt der Anteil der dosiert zugesetzten Mittelfkornfraktion bis zu einem Drittel der Gesamtheit an Agglomeraten und feinstkörnigen eisenhältigen Konzentraten.

Im Schmelzreduktionsaggregat erfolgen die finale Reduktion und die Aufschmelzung der Agglomerate, wobei neben dem flüssigen Roheisen beziehungsweise den flüssigen Stahlvorprodukten auch Schlacke entsteht.

Bevorzugt erfolgt die Verwendung der Agglomerate derart, dass dem Reduktionsaggregat zumindest eine Teilmenge des Offgases und/oder zumindest eine Teilmenge des im Schmelzreduktionsaggregat gebildeten Reduktionsgases und/oder zumindest eine Teilmenge des durch den Bunker geströmten Reduktionsgases nach einer Entstaubung in einer Entstaubungseinrichtung und gegebenenfalls nach Durchströmen einer CO₂-Entfernungseinrichtung zugeführt wird, dadurch gekennzeichnet, dass das in der Entstaubungseinrichtung bei der Entstaubung anfallende kohlenstoffhältige Material der Vorrichtung zur Herstellung der Agglomerate zugeführt wird.

Ein weiterer Gegenstand der Erfindung ist ein Verfahren zur Herstellung von Stahl, bei dem nach dem erfindungsgemäßen Verfahren hergestelltes flüssiges Roheisen oder flüssiges Stahlvorprodukt nach einem oder mehreren Behandlungsschritten zur Veränderung der chemischen Zusammensetzung des flüssigen Roheisens beziehungsweise des flüssigen Stahlvorproduktes zu einem in fester Form vorliegenden Stahlzwischenprodukt oder Stahlendprodukt verarbeitet wird.

Die Behandlungsschritte erfolgen dabei im Rahmen sekundärmetallurgischer Prozesschritte die geeignet sind, die chemische Zusammensetzung und die chemischen Eigenschaften des flüssigen Roheisens beziehungsweise des flüssigen Stahlvorproduktes zu beeinflussen oder zu verändern. Als Stahlzwischenprodukt oder Stahlendprodukt kommen beispielsweise Brammen, Bleche, Flachband, beschichtetes Blech, insbesondere verzinktes Blech, in Frage.

Bei den oben genannten Versuchen, bei denen überraschender Weise eine Erhöhung der Festigkeit der Agglomerate bereits bei Temperaturen ab 500°C in der Wärmebehandlungsvorrichtung festgestellt wurde, wurde umfasste das Gemisch

20kg feinstkörnige eisenhältige Konzentrate, 0,2kg Bentonit als Bindemittel und 5 Massenprozent FINEX^{®}- Schlamm - bezogen auf die gesamte Trockenmasse der aus dem Gemisch hergestellten Agglomerate. Insgesamt wurden dem Gemisch 2,55 Liter Wasser zugesetzt.

Die aus diesem Gemisch hergestellten Agglomerate wurden mehreren, zeitlich aufeinanderfolgenden Wärmebehandlungsschritten unterzogen. Der erste Wärmebehandlungsschritt erfolgte 15 Minuten bei 105°C, der zweite Wärmebehandlungsschritt 15 Minuten bei 300°C, der dritte Wärmebehandlungsschritt 15 Minuten bei 525°C und der vierte Wärmebehandlungsschritt 15 Minuten bei 650°C. Die entsprechenden Punktdruckfestigkeiten der Agglomerate nach den einzelnen Wärmebehandlungsschritten betrugen 1,6 Newton nach dem ersten Wärmebehandlungsschritt, 4,86 Newton nach dem zweiten Wärmebehandlungsschritt, 17,92 Newton nach dem dritten Wärmebehandlungsschritt und 17,95 Newton nach dem vierten Wärmebehandlungsschritt.

Die überraschenderweise festgestellte Erhöhung der Festigkeit, beziehungsweise Punktdruckfestigkeit der erfindungsgemäß hergestellten Agglomerate erfolgte zwischen dem zweiten und dritten Wärmebehandlungsschritt, also zwischen 300°C und 525°C.

Tabelle I zeigt die Ergebnisse von weiteren Versuchen, bei denen im Rahmen einer sogenannten FINEX^{®} - Standardprozedur der im Reduktionsaggregat mit Wirbelschichtverfahren verbleibende Anteil und der aus dem Reduktionsaggregat ausgetragene Anteil der im Reduktionsaggregat eingesetzten Pellets bestimmt wurde.

**Tabelle I: Simulation einer FINEX^{®} - Standardprozedur mit nach dem Stand der Technik hergestellten Pellets - Versuch 1, Versuch 2 und Versuch 3 - und mit erfindungsgemäß hergestellten Pellets - Erf. Versuch.**

| **Simulation einer FINEX - Standardprozedur** | | Erf. Versuch | Versuch 1 | Versuch 2 | Versuch 3 |
|---|---|---|---|---|---|
| Temperatur der Wärmebehandlung / °C | | 1150 | 1250 | k.W. | 1250 |
| Probenmasse in Retorte / g | vor Simulation | 125 | 250 | 250 | 125 |
| Korngrößenverteilung der Pellets in Retorte / mm | | 0,5-1 | 0,5-1 | 0,5-1 | 0,5-1 |
| Anteil Probenmasse in Filter 1 / % | nach Simulation | 0, 1 | 1,2 | 5,2 | 0, 8 |
| Anteil Probenmasse in Filer 2 und 3 / % | | 0, 0 | 0, 0 | 81,8 | 0, 0 |
| Anteil Probenmasse in Zyklon / % | | 0, 0 | 0, 8 | 0, 0 | 0, 0 |
| Anteil Probenmasse in Retorte / % | | 99, 9 | 98,0 | 13,0 | 99,2 |
| Summe Anteile / % | | 100,0 | 100,0 | 100,0 | 100,0 |

Die sogenannte FINEX^{®} - Standardprozedur simuliert die in einem Reduktionsaggregat mit Wirbelschichtverfahren ablaufenden Vorgänge während der Reduktion der darin eingesetzten Pellets. Zusätzlich werden die Verhältnisse der mit dem Offgas aus dem Reduktionsaggregat ausgetragenen Anteile der eingesetzten Pellets bestimmt.

Dies geschieht derart, dass das Reduktionsaggregat, beziehungsweise die Wirbelschicht im Reduktionsaggregat von einer zylindrischen Retorte mit einem Durchmesser von 68mm simuliert wird. Vor Einbringen der Pellets in die Retorte wird die Masse der Pellets, welche der Probenmasse in Retorte entspricht, bestimmt. Die Pellets werden anschließend in die Retorte eingebracht und die Simulation wird gestartet. Nach Beendigung der Simulation werden die aus der Retorte, welche dem Reduktionsaggregat entspricht, ausgetragenen Anteile der Pellets beziehungsweise deren Unterfraktionen, massenmäßig bestimmt und in ein Verhältnis zur Masse der vor dem Start der Simulation in die Retorte eingebrachten Pellets gesetzt - Anteil Probemasse in Filter 1, 2 und 3 sowie Anteil Probemasse in Zyklon. Weiters wird die Masse der nach der Simulation in der Retorte verbliebenen Pellets bestimmt und in das Verhältnis zur Masse der vor dem Start der Simulation in die Retorte eingebrachten Pellets gesetzt - Anteil Probemasse in Retorte. Die Summe der oben genannten Anteile - die aus der Retorte ausgetragenen Anteile und der in der Retorte verbliebene Anteil - ergibt 100%, welche der Masse der vor dem Start der Simulation in die Retorte eingebrachten Pellets entspricht.

Die Filter 1 und 2 beziehungsweise der Zyklon entsprechen den im Rahmen eines FINEX^{®} - Verfahrens dem Reduktionsaggregat zugeordneten Entstaubungsvorrichtungen. Die bei den Versuchen 1 bis 3 und dem erfindungsgemäßen Versuch - in der Tabelle I mit Erf. Versuch bezeichnet - eingesetzten Pellets weisen allesamt eine Körnung von 0,5mm bis 1mm auf. Bei den Versuchen 1 und 3 wurden die Pellets nach dem Stand der Technik - ohne Einbringen von kohlenstoffhältigem Material in das Gemisch, welches zu Pellets agglomeriert wird - hergestellt, und bei einer Temperatur von 1250°C in der Wärmebehandlungsvorrichtung wärmebehandelt. Versuch 2 wurde ebenfalls unter Verwendung von nach dem Stand der Technik hergestellten Pellets durchgeführt, jedoch ohne eine Wärmebehandlung der Pellets nach dem Agglomerieren des Gemisches, während beim erfindungsgemäßen Versuch - Erf. Versuch - erfindungsgemäß hergestellte Pellets eingesetzt wurden. Dabei wurde vor dem Agglomerationsschritt erfindungsgemäß kohlenstoffhältiges Material in Form von 5 Massenprozent FINEX^{®} - Schlamm, bezogen auf die gesamte Trockenmasse der Pellets, in das Gemisch eingebracht, wobei die Wärmebehandlung der aus dem Gemisch hergestellten Pellets bei einer Temperatur von 1150°C erfolgte.

Ein Vergleich der Ergebnisse der Versuche zeigt, dass beim erfindungsgemäßen Versuch, der Anteil der in der Retorte verbliebenen Masse an Pellets mit 99,9% - Versuch 1: 98%, Versuch 2: 13%, Versuch 3: 99,2% - am höchsten ist. Das bedeutet, dass beim erfindungsgemäßen Versuch der Zerfall der Pellets in der Retorte unter Entstehung der Unterfraktion während der Simulation des Reduktionsvorganges mit Wirbelschichtverfahren im Vergleich zu den Versuchen 1, 2 und 3 am geringsten gewesen sein musste, da die ausgetragenen Anteile der Pellets beziehungsweise deren Unterfraktionen beim erfindungsgemäßen Versuch am geringsten waren. Dies kann nur dann der Fall sein, wenn die Festigkeit der erfindungsgemäß hergestellten Pellets im Vergleich zu den nach dem Stand der Technik hergestellten Pellets am höchsten war - unter sonst gleichen Versuchsbedingungen.

### Kurze Beschreibung der Zeichnungen

Die Erfindung wird nachfolgend in beispielhafter Weise anhand der beigefügten Figuren erläutert.
FIG 1 zeigt beispielhaft und schematisch ein erfindungsgemäßes Verfahren und eine erfindungsgemäße Vorrichtung zur Herstellung von Agglomeraten.
FIG 2 zeigt beispielhaft und schematisch die Verwendung von nach dem erfindungsgemäßen Verfahren hergestellten Agglomeraten in einem Verfahren zur Herstellung von flüssigem Roheisen beziehungsweise flüssigen Stahlvorprodukten.

### Beschreibung der Ausführungsformen

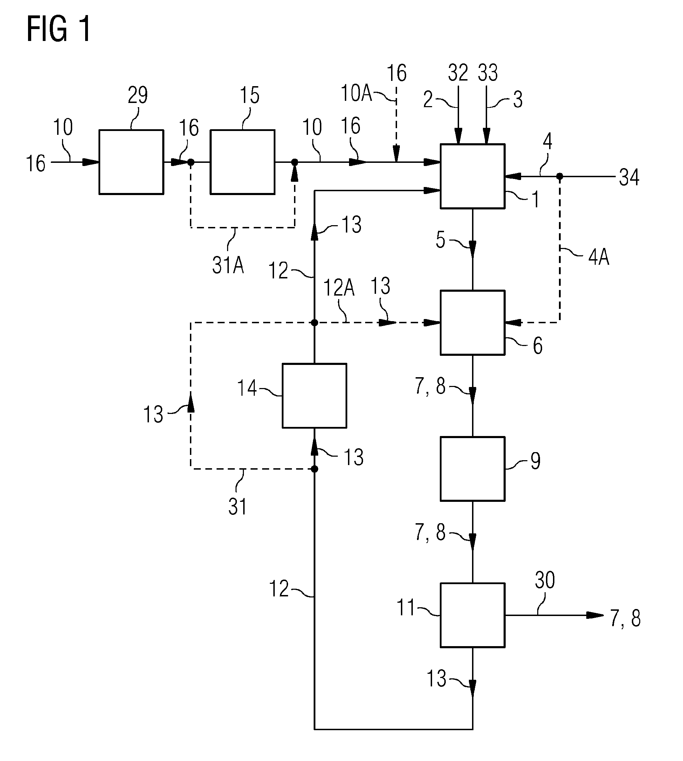

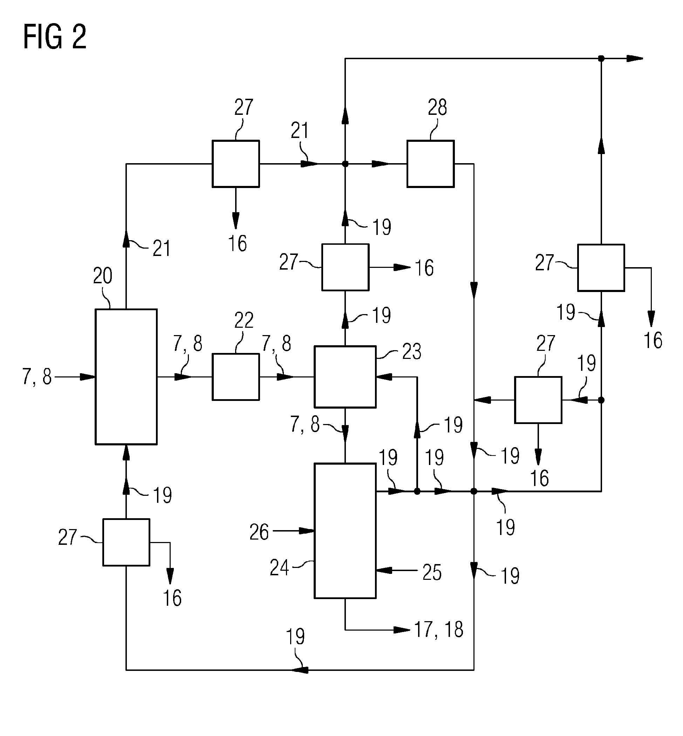

Mit in FIG 1 und FIG 2 dargestellten Punkten an Kreuzungspunkten von Leitungen wird eine Verbindung zwischen den entsprechenden kreuzenden Leitungen dargestellt.

FIG 1 zeigt beispielhaft und schematisch ein erfindungsgemäßes Verfahren und eine erfindungsgemäße Vorrichtung zur Herstellung von Agglomeraten. In einer Mischvorrichtung (1) wird ein Gemisch (5) hergestellt in dem der Mischvorrichtung (1) mittels einer Konzentratzufuhrleitung (2) feinstkörnige eisenhältige Konzentrate (32), welche vorzugsweise Eisenoxide, insbesondere Hämatit und/oder Magnetit, umfassen, und mittels einer Wasserzufuhrleitung (4) Wasser (34) zugeführt wird. Gegebenenfalls werden der Mischvorrichtung (1) über eine Bindemittelzufuhrleitung (3) ein Bindemittel (33), beispielsweise Bentonit, und/oder zusätzliche Additive zugeführt. Zusätzlich wird in das in der Mischvorrichtung (1) hergestellten Gemisch (5) mittels einer Zufuhrleitung (10) und/oder (10A) kohlenstoffhältiges Material (16) eingebracht. Das Gemisch (5) wird anschließend in eine Agglomerationsvorrichtung (6) eingebracht, in der es in einem Agglomerationsschritt zu Agglomeraten, insbesondere zu Pellets (7) und/oder zu Granulaten (8), agglomeriert wird. Gegebenenfalls verfügt die Agglomerationsvorrichtung (6) über eine Wasserzufuhrleitung (4A) und über eine Rcycleleitung (12A). Die Pellets (7) und/oder Granulate (8) werden anschließend in eine Wärmebehandlungsvorrichtung (9) eingebracht. In dieser erfolgt eine Wärmebehandlung der Pellets (7) und/oder Granulate (8) bei einer Temperatur zwischen 500°C und 1200°C, vorzugsweise bei einer Temperatur zwischen 800°C und 1100°C, besonders bevorzugt bei einer Temperatur zwischen 800°C und 1000°C. Während der Wärmebehandlung in der Wärmebehandlungsvorrichtung (9) werden die Pellets (7) und/oder Granulate (8) gehärtet. Gegebenenfalls wird dem Gemisch (5), beziehungsweise den noch nicht gehärteten Pellets (7) und/oder Granulaten (8) über die Wasserzufuhrleitung (4A) während des Agglomerationsschrittes in der Agglomerationsvorrichtung (6) Wasser (34) zugesetzt. Die gehärteten Pellets (7) und/oder Granulate (8) werden nach der Wärmebehandlung einer nachfolgenden Klassierungsvorrichtung (11), beispielsweise einem Sieb, zugeführt. In der Klassierungsvorrichtung (11) erfolgt eine Abscheidung von Fehlkorn (13) zur Einstellung eines bestimmten Kornbandes der gehärteten Pellets (7) und/oder Granulate (8). Liegt die Korngröße der gehärteten Pellets (7) und/oder Granulate (8) oberhalb der Obergrenze des gewünschten Kornbandes - sogenanntes Überkorn - beziehungsweise unterhalb der Untergrenze des gewünschten Kornbandes - sogenanntes Unterkorn -, so werden die gehärteten Pellets (7) und/oder Granulate (8) als Fehlkorn (13) abgeschieden. Die nicht abgeschiedenen, gehärteten und klassierten Pellets (7) und/oder Granulate (8) werden mittels einer der Klassierungsvorrichtung (11) zugeordneten Austragleitung (30) aus der Klassierungsvorrichtung (11) ausgetragen. Das abgeschiedene Fehlkorn (13) wird über eine Recycleleitung (12) in eine Desagglomerationsvorrichtung (14) eingebracht. In der Desagglomerationsvorrichtung (14) erfolgt eine Zerkleinerung des Überkornes und/oder Unterkornes. Anschließend wird das aus der Desagglomerationsvorrichtung (14) stammende zerkleinerte Fehlkorn (13) mittels der Recycleleitung (12) in die Mischvorrichtung (1) und/oder mittels der Recycleleitung (12A) in die Agglomerationsvorrichtung (6) eingebracht. Das in der Klassierungsvorrichtung (11) abgeschiedene Fehlkorn (13) kann gegebenenfalls über eine die Desagglomerationsvorrichtung (14) umgehende Bypassleitung (31) und Recycleleitungen (12) beziehungsweise (12A) in die Mischvorrichtung (1) beziehungsweise in die Agglomerationsvorrichtung (6) eingebracht werden.

FIG 2 zeigt beispielhaft und schematisch die Verwendung von nach dem erfindungsgemäßen Verfahren hergestellten Agglomeraten in einem Verfahren zur Herstellung von flüssigem Roheisen beziehungsweise flüssigen Stahlvorprodukten.

Das in FIG 2 dargestellte Verfahren ist das aus dem Stand der Technik bekannte FINEX^{®} - Verfahren, wobei in FIG 2 nur ein Reduktionsaggregat dargestellt ist.

Die nach dem erfindungsgemäßen Verfahren hergestellten Pellets (7) und/oder Granulate (8) werden in gehärtetem und klassiertem Zustand mit einem bestimmten Kornband über die in FIG 1 dargestellte Austragleitung (30) aus der Klassierungsvorrichtung (11) ausgetragen und in ein Reduktionsaggregat (20), insbesondere mit Wirbelschichtverfahren, eingebracht. Im Reduktionsaggregat (20) erfolgt mittels eines Reduktionsgases (19) eine Vorreduktion der eingebrachten Pellets (7) und/oder Granulate (8). Das bei der Reduktion im Reduktionsaggregat (20) verbrauchte Reduktionsgas (19) wird als Offgas (21) aus dem Reduktionsaggregat (20) abgezogen. Die vorreduzierten Pellets (7) und/oder Granulate (8) werden nach einer Kompaktierung (22) in einen mit dem Reduktionsgas (19) begasbaren Bunker (23) eingebracht. Die in den Bunker (23) eingebrachten vorreduzierten Pellets (7) und/oder Granulate (8) werden anschließend einem Schmelzreduktionsaggregat (24) zugeführt, in dem die Pellets (7) und/oder Granulate (8) unter Zugabe von sauerstoffhältigem Gas (25) und kohlenstoffhältigen Energieträgern (26) unter Bildung des Reduktionsgases (19) fertigreduziert und zu flüssigem Roheisen (17) beziehungsweise flüssigen Stahlvorprodukten (18) aufgeschmolzen werden. Bei diesem Vorgang wird auch flüssige Schlacke gebildet.

Das flüssige Roheisen (17) beziehungsweise die flüssigen Stahlvorprodukte (18) werden getrennt von der flüssigen Schlacke aus dem Schmelzreduktionsaggregat (24) ausgetragen und nach ein oder mehreren Behandlungsschritten zur Veränderung der chemischen Zusammensetzung des flüssigen Roheisens (17) beziehungsweise des flüssigen Stahlvorproduktes (18) zu einem in fester Form vorliegenden Stahlzwischenprodukt oder Stahlendprodukt, beispielsweise Brammen, Bleche, Flachband, beschichtetes Blech, insbesondere verzinktes Blech, verarbeitet.

Eine Teilmenge des aus dem Reduktionsaggregat (20) abgezogenen Offgases (21) und eine Teilmenge des im Schmelzreduktionsaggregat (24) gebildeten Reduktionsgases (19) und zumindest eine Teilmenge des durch den Bunker (23) geströmten Reduktionsgases (19) wird nach einer Entstaubung in Entstaubungseinrichtungen (27) und gegebenenfalls nach Durchströmen einer CO₂-Entfernungseinrichtung (28) in das Reduktionsaggregat (20) eingebracht. Das in den Entstaubungseinrichtungen (27) bei der Entstaubung anfallende kohlenstoffhältige Material (16) wird, falls es sich um Nassentstaubungseinrichtungen handelt, als Schlamm, beispielsweise als FINEX^{®}-Schlamm, mittels einer in FIG 1 dargestellten Zufuhrleitung (10) in eine in dieser Zufuhrleitung (10) angeordnete Entwässerungsvorrichtung (29) zur mechanischen Vorentwässerung des Schlammes eingebracht. Anschließend wird das kohlenstoffhältige Material (16) als vorentwässerter Schlamm zur Trocknung in eine der Entwässerungsvorrichtung (29) nachgeordnete Trocknungseinrichtung (15) eingebracht. Nach der Trocknung des kohlenstoffhältigen Materials (16) in der Trocknungseinrichtung (15) wird das kohlenstoffhältige Material (16) über die Zufuhrleitung (10) als getrockneter Schlamm in die Mischvorrichtung (1) eingebracht, in der das Gemisch (5) hergestellt wird.

Optional besteht die Möglichkeit, das kohlenstoffhältige Material (16) direkt als vorentwässerten Schlamm über eine die Trocknungseinrichtung (15) umgehende Bypassleitung (31A) und die Zufuhrleitung (10) in die Mischvorrichtung (1) einzubringen.

Stammt das kohlenstoffhältige Material aus Trockenentstaubungseinrichtungen, so wird das kohlenstoffhältige Material (16) staubförmiger beziehungsweise pulvriger Konsistenz unter Umgehung der Entwässerungsvorrichtung (29) und der Trocknungsvorrichtung (15) über die Zufuhrleitungen (10A) und (10) in die Mischvorrichtung (1) eingebracht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Mischvorrichtung
- 2: Konzentratzufuhrleitung
- 3: Bindemittelzufuhrleitung
- 4,4A: Wasserzufuhrleitung
- 5: Gemisch
- 6: Agglomerationsvorrichtung
- 7: Pellets
- 8: Granulate
- 9: Wärmebehandlungsvorrichtung
- 10,10A: Zufuhrleitung
- 11: Klassierungsvorrichtung
- 12,12A: Recycleleitung
- 13: Fehlkorn
- 14: Desagglomerationsvorrichtung
- 15: Trocknungseinrichtung
- 16: Kohlenstoffhältiges Material
- 17: Flüssiges Roheisen
- 18: Flüssige Stahlvorprodukte
- 19: Reduktionsgas
- 20: Reduktionsaggregat
- 21: Offgas
- 22: Kompaktierung
- 23: Bunker
- 24: Schmelzreduktionsaggregat
- 25: Sauerstoffhältiges Gas
- 26: Kohlenstoffhältige Energieträger
- 27: Entstaubungseinrichtung
- 28: CO₂-Entfernungseinrichtung
- 29: Entwässerungsvorrichtung
- 30: Austragleitung
- 31,31A: Bypassleitung
- 32: feinstkörnige eisenhältige Konzentrate
- 33: Bindemittel
- 34: Wasser

## Patentansprüche

1. Verfahren zur Herstellung von Agglomeraten bei dem ein feinstkörnige eisenhältige Konzentrate, Wasser und gegebenenfalls Bindemittel umfassendes Gemisch hergestellt wird, und wobei das Gemisch in einem Agglomerationsschritt, gegebenenfalls unter Zugabe von Wasser, zu Agglomeraten agglomeriert, und die Agglomerate mittels einer nachfolgenden Wärmebehandlung gehärtet werden, **dadurch gekennzeichnet, dass** vor dem Agglomerationsschritt kohlenstoffhältiges Material in das Gemisch eingebracht wird, und die Wärmebehandlung der Agglomerate bei einer Temperatur zwischen 500°C und 1200°C erfolgt.

2. Verfahren nach Anspruch 1, **dadurch gekennzeichnet, dass** das kohlenstoffhältige Material aus einer, einer FINEX^{®}-Anlage, COREX^{®}-Anlage, einem Hochofen oder einer Direktreduktionsanlage zugeordneten, Entstaubungseinrichtung stammt.

3. Verfahren nach Anspruch 2, **dadurch gekennzeichnet, dass** die Entstaubungseinrichtung eine Nassentstaubungseinrichtung ist und das kohlenstoffhältige Material Schlamm, insbesondere FINEX^{®}-Schlamm, aus der Nassentstaubungseinrichtung umfasst.

4. Verfahren nach Anspruch 3, **dadurch gekennzeichnet, dass** der Schlamm vor dessen Einbringen in das Gemisch einer mechanischen Vorentwässerung in einer Entwässerungsvorrichtung und einer nachfolgenden Trocknung unterzogen wird.

5. Verfahren nach Anspruch 2, **dadurch gekennzeichnet, dass** die Entstaubungseinrichtung eine Trockenentstaubungseinrichtung ist.

6. Verfahren nach Anspruch 1, **dadurch gekennzeichnet, dass** das Gemisch mittels mehrerer aufeinanderfolgenden Mischungsschritte hergestellt wird.

7. Verfahren nach Anspruch 1, **dadurch gekennzeichnet, dass** das Bindemittel Bentonit ist.

8. Verfahren nach Anspruch 1, **dadurch gekennzeichnet, dass** die Agglomerate einer Klassierung, unter Abscheidung eines Fehlkornes, zur Einstellung eines bestimmten Kornbandes der Agglomerate unterzogen werden.

9. Verfahren nach Anspruch 8, **dadurch gekennzeichnet, dass** das abgeschiedene Fehlkorn, gegebenenfalls nach einem Desagglomerationsschritt, in das Gemisch eingebracht und/oder dem Agglomerationsschritt zugeführt wird.

10. Verfahren nach Anspruch 1, **dadurch gekennzeichnet, dass** die feinstkörnigen eisenhältigen Konzentrate Magnetit und/oder Hämatit umfassen.

11. Vorrichtung zur Durchführung des Verfahrens nach einem der Ansprüche 1 bis 10 umfassend zumindest eine Mischvorrichtung (1) zur Herstellung eines Gemisches (5) mit zugeordneter Konzentratzufuhrleitung (2), Bindemittelzufuhrleitung (3) und Wasserzufuhrleitung (4), eine der Mischvorrichtung (1) nachgeordnete Agglomerationsvorrichtung (6) zur Agglomeration des Gemisches (5) zu Pellets (7) und/oder Granulaten (8) und eine der Agglomerationsvorrichtung (6) nachgeordnete Wärmebehandlungsvorrichtung (9) zur Härtung der Pellets (7) und/oder Granulate (8), **dadurch gekennzeichnet, dass** der Mischvorrichtung (1) eine Zufuhrleitung (10) zur Zufuhr von kohlenstoffhältigem Material (16) zugeordnet ist.

12. Vorrichtung nach Anspruch 11, **dadurch gekennzeichnet, dass** der Wärmebehandlungsvorrichtung (9) eine Klassierungsvorrichtung (11) zur Klassierung der in der Wärmebehandlungsvorrichtung (9) gehärteten Pellets (7) und/oder Granulate (8) mit einer zugeordneten Austragleitung (30) zum Austragen der gehärteten und klassierten Pellets (7) und/oder Granulate (8) nachgeordnet ist, und eine der Klassierungsvorrichtung (11) entspringende und in die Mischvorrichtung (1) beziehungsweise Agglomerationsvorrichtung (6) mündende Recylcleleitungen (12,12A) zur Zufuhr eines in der Klassierungsvorrichtung (11) abgeschiedenen Fehlkornes (13) in die Mischvorrichtung (1) beziehungsweise Agglomerationsvorrichtung (6) vorhanden ist.

13. Vorrichtung nach Anspruch 12, **dadurch gekennzeichnet, dass** in der Recycleleitung (12) eine Desagglomerationsvorrichtung (14) zur Desagglomerierung eines im Fehlkorn (13) enthaltenen Überkornes und/oder Unterkornes angeordnet ist.

14. Vorrichtung nach einem der Ansprüche 11 bis 13, **dadurch gekennzeichnet, dass** in der Zufuhrleitung (10) zur Zufuhr von kohlenstoffhältigem Material (16) eine Entwässerungsvorrichtung (29) zur Vorentwässerung des als Schlamm in die Entwässerungsvorrichtung (29) eingebrachten kohlenstoffhältigen Materials (16) und eine nachgeordnete Trocknungseinrichtung (15) zur Trocknung des vorentwässerten kohlenstoffhältigen Materials (16) angeordnet ist.

15. Verwendung von nach einem der Ansprüche 1 bis 10 hergestellten Agglomeraten zur Herstellung von flüssigem Roheisen (17) beziehungsweise flüssigen Stahlvorprodukten (18) in einem Schmelzreduktionsverfahren, wobei die Pellets (7) und/oder Granulate (8) mittels eines Reduktionsgases (19) in zumindest einem Reduktionsaggregat (20) vorreduziert werden, und das verbrauchte Reduktionsgas (19) als Offgas (21) aus dem Reduktionsaggregat (20) abgezogen wird, und die vorreduzierten Pellets (7) und/oder Granulate (8), gegebenenfalls nach einer Kompaktierung (22) und/oder einer Zwischenspeicherung in einem vom Reduktionsgas (19) durchströmten Bunker (23), in ein Schmelzreduktionsaggregat (24) eingebracht werden, und unter Zugabe von sauerstoffhältigem Gas (25) und kohlenstoffhältigen Energieträgern (26) unter Bildung des Reduktionsgases (19) fertigreduziert und zu flüssigem Roheisen (17) beziehungsweise flüssigen Stahlvorprodukten (18) aufgeschmolzen werden.

16. Verwendung der Agglomerate nach Anspruch 15, wobei dem Reduktionsaggregat (20) zumindest eine Teilmenge des Offgases (21) und/oder zumindest eine Teilmenge des im Schmelzreduktionsaggregat (24) gebildeten Reduktionsgases (19) und/oder zumindest eine Teilmenge des durch den Bunker (23) geströmten Reduktionsgases (19) nach einer Entstaubung in einer Entstaubungseinrichtung (27) und gegebenenfalls nach Durchströmen einer CO₂-Entfernungseinrichtung (28) zugeführt wird, **dadurch gekennzeichnet, dass** ein in der Entstaubungseinrichtung (27) bei der Entstaubung anfallendes kohlenstoffhältiges Material (16) einer Vorrichtung zur Herstellung von Agglomeraten nach einem der Ansprüche 11 bis 14 zugeführt wird.

17. Verfahren zur Herstellung von Stahl, bei dem nach einem der Ansprüche 15 oder 16 hergestelltes flüssiges Roheisen (17) oder flüssiges Stahlvorprodukt (18) nach einem oder mehreren Behandlungsschritten zur Veränderung der chemischen Zusammensetzung des flüssigen Roheisens (17) beziehungsweise des flüssigen Stahlvorproduktes (18) zu einem in fester Form vorliegenden Stahlzwischenprodukt oder Stahlendprodukt verarbeitet wird.
